# EUROPEAN PATENT APPLICATION

(11) **EP 3 588 710 A1**
(43) Date of publication of application: **01.01.2020**
(21) Application number: 19175846.5
(22) Date of filing: 22.05.2019
(51) Int. Cl.: H02G 3/08, H02G 3/16

(54) **POWER DISTRIBUTION BLOCK ASSEMBLY WITH EASILY REMOVABLE KNOCKOUTS**

(30) Priority: 29.06.2018 IN 201841024318
(71) Applicant: Tyco Electronics Services GmbH, 8200 Schaffhausen (CH)
(72) Inventor: SHWETA, Kulkarni, 560078 BENGALURU (IN); SAURABH, Bisht, 560022 BENGALURU (IN); RICHA, Rani, 560045 BENGALARU (IN)
(74) Representative: Verriest, Philippe

(57) **Abstract**

The invention relates to a power distribution block assembly (100) comprising an insulated housing (102) and a conductive metal block. The housing (102) comprises an input and output for connecting electrical conductors for electrical power distribution. Each of the input and output comprises one or more connection points (108, 110) for connecting the conductors with the conductive metal block. At least one connection point is provided with a knockout. The knockout comprises a slot for engagement with a tool for breaking and removing the knockout from the insulated housing (102). One or more screws are provided for connection between one or more of the conductors, the metal block and the housing (102). Here, head of each screw comprises a slot for engagement with the tool. The slots on the knockout and the heads have identical cross-sections, wherein the cross-section of each slot is complementary to a shape of a corresponding cross-section of the tool.

## Description

### FIELD OF THE INVENTION

The present invention relates to distribution block assemblies that are used for electrical power distribution. More specifically, the present invention relates to power distribution block assemblies with easily removable knockouts.

### BACKGROUND OF THE INVENTION

In a distribution block assembly (also referred as terminal block, power block etc.) or similar products, electrical conductor connections vary based on applications. A distribution block assembly may have two or more connection sides for conductor connections. For example, a distribution block assembly may have one connection side as input for cable connections, and one connection side as output for cable connections. Each connection side can have one or more connection points for connecting cables, buses etc. For example, an input may be designed for one, two or multiple connections. Similarly, an output may have provision for different number of output connections.

According to the application, some or all of the connection points may be utilized. At times, few connection points may not be utilized (as the application may not require the same). For example, there may be provision for connecting two cables as input, and two cables as output, wherein only one input and output point may be used. In such cases some connection points remain unused.

As some connection points may not be eventually utilized, it is important and typically mandated according to Ingress Protection (IP) requirements, to have knockouts provided on the connection points. In order to break a knockout, one needs to apply a force to break the knockout. For example, the knockout can be pushed inside, and the knockout gets broken. Once the knockout is broken, broken pieces of knockout can be removed with the help of a tool (e.g. a screwdriver, pliers or some other tool). This process of breaking and removing a knockout is not efficient.

The process of breaking and removing the knockout can be time and effort consuming. For example, the distribution block assembly may be mounted on a panel. In such a case, normal access to the assembly itself can be a challenge, and breaking the knockout in such installation can be cumbersome. Broken pieces of the knockout can be difficult to remove. For example, a broken piece of the knockout can get stuck inside the connector, or other part of the installation (e.g. fall down from block to panel etc.). This can become troublesome in case the knockout is metallic (instead of plastic).

Accordingly, there is a need for improvement in knockouts of distribution block assemblies, where knockout can be easily removed.

### SUMMARY OF THE INVENTION

Various aspects of the invention relate to a power distribution block assembly. Such an assembly can be used for distribution of electric power (e.g. from transformer to homes). The power distribution block assembly comprises an insulated housing and a conductive metal block. The insulated housing may be made from plastic, or other insulating material. The insulated housing comprises provisions for passing electrical conductors with the conductive metal block. Accordingly, the insulated housing comprises an input and output for connecting electrical conductors for the electrical power distribution. Each of the input and output comprises one or more connection points for connecting the electrical conductors with the conductive metal block. For example, the housing may have provision to connect one electrical cable as input and two cables as output, where the input has one connection point and the output has two connection points. Similarly, there may be provision to connect two cables. Accordingly there may be two connection points at the input, or output.

At least one connection point of the one or more connection points is provided with a knockout. For example, all the connection points may be provided with knockouts. Alternately, only one of the several connection points, or few connection points (e.g. half of the connection points) may be provided with the knockouts. For example, only one connection point at one connection side may have a knockout.

The knockout provided at each connection point may have a shape according to the shape of corresponding connection. For example, the knockout may be circular for a cable connection. Taking another example, the knockout may be rectangular for an electrical bus. The knockout comprises a slot for engagement with a tool for breaking and removing the knockout from the insulated housing. The tool may be a hex key. Alternately, the tool may be a screw driver. In accordance with an embodiment, the slot is provided at the center of the knockout.

In one embodiment, the slot of the knockout is hexagonal (has a hexagonal cross-section). In another embodiment, the slot has a square or rectangular cross-section. In yet another embodiment, the slot has a star-shaped cross-section. The cross-section of the slot is complementary to that of the tool. For instance, the slot may have a hexagonal opening with suitable dimensions to receive a hex key for breaking and removing the knockout.

The cross-section of the slot of the knockout(s) is identical to the cross-section of heads of screws provided for electrical and mechanical connection between one or more of the electrical conductors, the conductive metal block and the insulated housing. The screws may be provided for connecting the electrical conductors with the conductive metal block. The screws may also (alternately or additionally) be provided for connecting the conductive metal block with the housing. The head of each screw comprises a slot (or socket) for engagement with the tool for the electrical and mechanical connection. Thus, each screw may have a hexagonal socket provided for engagement with the hex key. Alternately, the screw may have a head with square, rectangular, star-shaped or other cross-section.

This way the slots provided on the knockout and the head of each screw have identical cross-sections, which may be hexagonal, square, rectangular, star-shaped etc. Accordingly, the same tool (hex key, screw driver etc.) having a complementary cross-section can be used for breaking and removing the knockout, as well as for tightening or loosening the screws. This reduces efforts and time required for breaking and removing the knockout and connecting the screws (e.g. for connecting cable) at the same position. Also, usage of a tool such as hex key to break and remove the knockout (with the slot provided) makes the process efficient. This is because using a tool that can be inserted into a slot provided for the purpose of breaking and removing the knockout, reduces the chances of the knockout breaking into smaller pieces. The broken knockout can be easily removed as it remains engaged with the tool.

### BRIEF DESCRIPTION OF DRAWINGS

The subject matter of the invention will be explained in more detail in the following text with reference to exemplary embodiments which are illustrated in attached drawings in which:
Figs. 1 and 2 show a power distribution block assembly, in accordance with an embodiment of the invention;
Fig. 3 shows a side view of a housing of the power distribution block assembly, in accordance with an embodiment of the invention;
Fig. 4 shows an exploded view of the power distribution block assembly, in accordance with an embodiment of the invention; and
Fig. 5 shows using a tool for breaking and removing knockout, and tightening screws for connection between electrical conductors and the conductive metal block, in accordance an embodiment of the invention.

### DETAILED DESCRIPTION

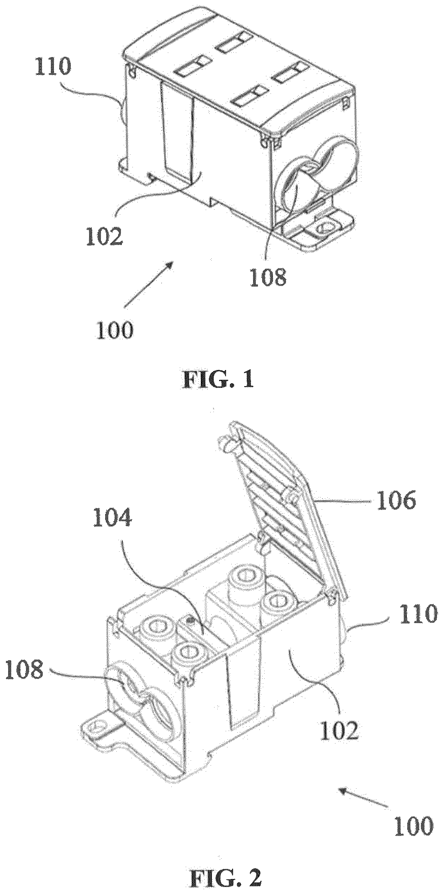

Various aspects of the invention relate to a power distribution block assembly. Such an assembly can be used for distribution of electric power (e.g. from transformer to homes). Fig. 1 shows the power distribution block assembly (100), in accordance with an embodiment of the invention. As shown, the assembly comprises a housing (102) and a conductive metal block (104). The housing may be made from an insulating material such as plastic. The housing may have a component that is movable / detachable. For example, there may be a movable / removable cover (such as 106 shown in Fig. 2). As shown in Fig. 2, the cover may be opened / removed to have access to the conductive metal block (e.g. to connect / disconnect conductors).

In accordance with various embodiments, the housing has provisions (e.g. an input and output) for connecting electrical conductors (such as electrical cables, buses etc.). For example, the assembly may be used for splitting a larger input (e.g. large cable or bus) into different smaller outputs (e.g. small cables or buses). Accordingly, each of the input and output comprises one or more connection points for connecting the electrical conductors with the conductive metal block. In the embodiment shown in Fig. 1, the input has two connection points (or slots / sockets) (such as 108). Similarly, the output has two connection points (such as 110).

It should be noted that the number of connection points can vary according to the configuration of the power distribution block assembly. For example, the housing may have provision to connect one electrical cable (or bus) as input and two cables as output, where the input has one connection point and the output has two connection points. Similarly, there may be provision to connect two cables. Accordingly, there may be one, two or more than two connection points at the input, or output of the housing.

In the embodiment shown in Fig. 1, the connection points are for connecting electrical cables. The shape / profile of the connection points may be different. For example, one connection point may be smaller than other, one may be for cable, other may be for bus etc. Such variations in the options for input / output connections would be readily apparent to one of ordinary skill in the art.

In accordance with various embodiments, at least one connection point of the one or more connection points is provided with a knockout. For example, all the connection points may be provided with knockouts. Alternately, only few (e.g. one or half of the connection points) may be provided with the knockouts. Taking an example, only one connection point of all the connection points may be provided with a knockout.

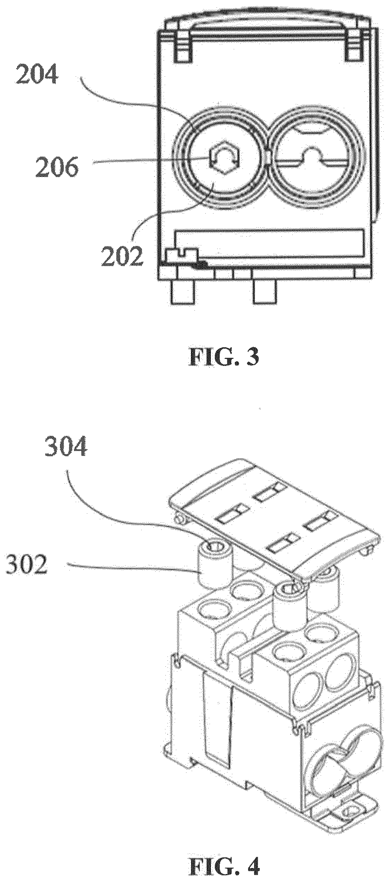

In accordance with an embodiment illustrated in Fig. 3, the knockout (202) is provided on one of the two connection points (which may be at the input or output side of the housing). The knockout provided at each connection point may have a shape according to the shape of the connection point (or conductor). In the embodiment of Fig. 3, the knockout is circular. The knockout may be square or rectangular according to the shape of the connection point. The knockout may be connected with the housing via one or more break points (such as 204). There may be different number of break points according to size, shape, material etc. In the embodiment shown in Fig. 3, four break points are provided.

In accordance with various embodiments, the knockout comprises a slot (such as 206 shown in Fig. 3) for engagement with a tool for breaking and removing the knockout from the housing. The tool may be a hex key. Alternately, the tool may be a screw driver. In accordance with the embodiments shown in Fig. 3, the slot is provided at the center of the knockout. Here, the slot of the knockout is hexagonal (i.e. has a hexagonal cross-section). The slot can alternately have one of a square, rectangular, star-shaped, or other cross-section. The cross-section of the slot is complementary to that of the tool. For instance, the slot is a hexagonal opening with suitable dimensions to receive a hex key for breaking and removing the knockout.

The cross-section of the slot of the knockout(s) is identical to the cross-section of heads (of slots / sockets thereof) of screws provided for electrical and mechanical connection between one or more of the electrical conductors, the conductive metal block and the insulated housing. In an embodiment shown in Fig. 4, the screws (such as 302) are provided for connecting the electrical conductors with the conductive metal block. The screws may alternately (or additionally) be provided for connecting the conductive metal block with the housing.

The head of each screw comprises a slot (or socket) for engagement with the tool for the electrical and mechanical connection between one or more of the electrical conductors, the conductive metal block and the insulated housing. In the embodiment shown in Fig. 4, the head of the screws have a hexagonal slot (such as 304). Thus, in accordance with Fig. 4, each screw has a hexagonal socket provided for engagement with the hex key. Alternately, the screw may have a head with square, rectangular, star-shaped or other cross-section, in accordance with other embodiments. This way, in accordance with different embodiments, the slots provided on the knockout and the head of each screw have identical cross-sections, which may be hexagonal, square, rectangular, star-shaped etc. Accordingly, the same tool (hex key, screw driver etc.) having a complementary cross-section can be used for breaking and removing the knockout, as well as for tightening or loosening the screws.

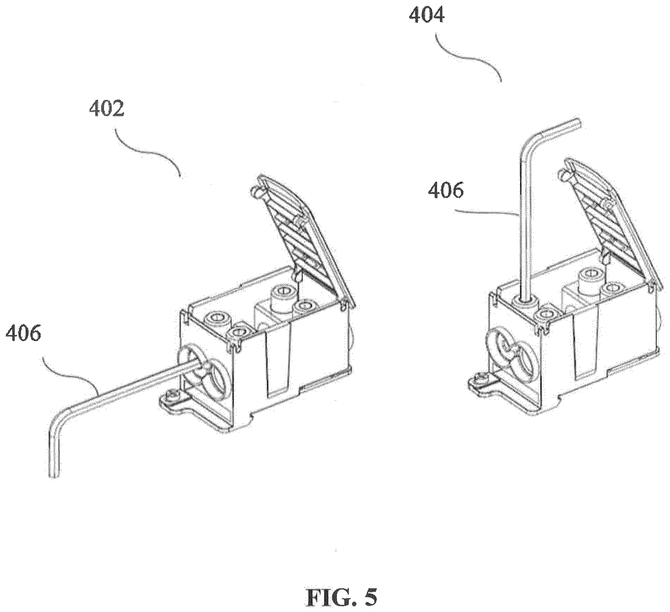

As shown in Fig. 5, the same tool (406) is used for breaking and removing the knockout (402), as well as for tightening or loosening the screws (404). This reduces efforts and time required for breaking and removing the knockout and connecting the screws (e.g. for connecting cables) at the same position. Also, usage of a tool such as hex key to break and remove the knockout (with the slot provided) makes the process efficient. This is because using a tool that can be inserted into a slot provided for the purpose of breaking and removing the knockout, reduces the chances of the knockout breaking into smaller pieces. The broken knockout can be easily removed (in one piece) as it remains engaged with the tool.

## Claims

1. A power distribution block assembly (100) comprising:
an insulated housing (102) with an input and an output for connecting electrical conductors with a conductive metal block, wherein each of the input and output comprises one or more connection points (108, 110) for connecting the electrical conductors with the conductive metal block, wherein at least one connection point of the one or more connection points is provided with a knockout (202) comprising a slot (206) for engagement with a tool (406) for breaking and removing the knockout from the insulated housing; and
the conductive metal block (104) for distributing electrical power between the electrical conductors, wherein one or more screws (302) are provided for electrical and mechanical connection between one or more of the electrical conductors, the conductive metal block and the insulated housing, wherein head of each screw comprises a slot (304) for engagement with the tool for the electrical and mechanical connection between one or more of the electrical conductors, the conductive metal block and the insulated housing,
wherein the slots provided on the knockout and the head of each screw have identical cross-sections, wherein the cross-section of each slot is complementary to a shape of a corresponding cross-section of the tool.

2. The power distribution block assembly of claim 1, wherein the knockout is circular and the slot is provided at the center of the knockout.

3. The power distribution block assembly of claim 2, wherein the slots of the knockout and the head of each screw are hexagonal.

4. The power distribution block assembly of claim 2, wherein the slots of the knockout and the head of each screw are one of square, rectangular and star-shaped.

5. The power distribution block assembly of claim 1, wherein the one or more screws are for the electrical and mechanical connection between the electrical conductors and the conductive metal block.

6. The power distribution block assembly of claim 1, wherein the one or more screws are for the mechanical connection between the conductive metal block and the housing.

7. The power distribution block assembly of claim 1, wherein the input has two connection points, and the output has two connection points, and at least one connection point of the input and output is provided with the knockout.
